# EUROPÄISCHE PATENTSCHRIFT

(11) **EP 0 817 233 B1**
(45) Veröffentlichungstag und Bekanntmachung des Hinweises auf die Patenterteilung: **05.12.2001**
(21) Anmeldenummer: 97201810.5
(22) Anmeldetag: 16.06.1997
(51) Int. Cl.: H01J 29/22, H01J 9/227

(54) **Bildschirm mit haftungsvermittelnder Silikatschicht**
Screen using adhesive-improving silicate layer
Ecran ayant une couche de silicate améliorant le pouvoir adhésif

(30) Priorität: 28.06.1996 DE 19625991
(43) Veröffentlichungstag der Anmeldung: 07.01.1998
(73) Patentinhaber: Philips Corporate Intellectual Property GmbH, 52064 Aachen (DE); Koninklijke Philips Electronics N.V., 5621 BA Eindhoven (NL)
(72) Erfinder: Bechtel, Helmut, Dr., Röntgenstrasse 24, 22335 Hamburg (DE); Gruhlke, Stefan, Röntgenstrasse 24, 22335 Hamburg (DE); Haase, Markus, Dr., Röntgenstrasse 24, 22335 Hamburg (DE); Opitz, Joachim, Dr., Röntgenstrasse 24, 22335 Hamburg (DE)
(74) Vertreter: Schmalz, Günther, Dipl.-Ing.

(56) Entgegenhaltungen:
- FR-A- 1 549 894
- GB-A- 815 265
- US-A- 5 178 906
- PATENT ABSTRACTS OF JAPAN vol. 007, no. 094 (E-171), 20.April 1983 & JP 58 016457 A (FUJITSU KK), 31.Januar 1983,

## Beschreibung

Die Erfindung betrifft einen Bildschirm, insbesondere einen flachen Bildschirm, mit einer Frontglasplatte mit einer transparenten Elektrodenschicht aus einem Metalloxid, z.B. indiumdotiertem Zinnoxid (ITO), und einer Leuchtstoffschicht.

Konventionelle Bildschirme sind direkt auf der Innenseite der Frontglasplatte mit einer oder mehreren strukturierten Leuchtstoffschichten beschichtet, die jeweils einen Leuchtstoff in einem Punkt- oder Streifenmuster enthalten. Bei Farbbildschirmen besteht das Muster aus Tripeln aus senkrechten Streifen oder aus im Dreieck angeordneten Punkten. Die Tripel setzen sich jeweils aus einem Leuchtstoffpunkt in den Grundemissionsfarben Rot, Blau und Grün zusammen. Diese Leuchtstoffschichten werden in einem photolithographischen Verfahren aufgebracht. Sie sind mit einer dünnen Aluminiumschicht bedeckt, mit der die anregenden Elektronen abgeführt werden.

Bei flachen Bildschirmen ersetzt man häufig die Aluminiumschicht durch ein Konstruktionsprinzip, bei dem auf der Frontglasplatte eine transparente Elektrodenschicht aufliegt, über der sich erst die Leuchtstoffschichten befinden. Die transparente Elektrodenschicht besteht im allgemeinen aus einer einige nm bis einige *µ*m starken, lichtdurchlässigen, elektrisch leitenden Schicht aus indiumdotiertem Zinnoxid (ITO) oder anderen Metalloxiden.

Um bei konventionellen Bildschirmen eine feste Verbindung mit ausreichender Haftfestigkeit zwischen der Glasoberfläche der Frontglasplatte und den Leuchtstoffschichten zu erzielen, wird die Glasoberfläche vorbehandelt. Diese Vorbehandlung besteht üblicherweise aus zwei Verfahrensschritten. In einem ersten Verfahrensschritt wird die Glasoberfläche mit verdünnter Flußsäure geätzt, um sie zu reinigen und um oberflächenaktive, haftungsvermittelnde Gruppen wie Silanol-Gruppen (- Si-OH) oder Siloxan-Gruppen ( - Si-O-Si-) zu erhalten. In einem zweiten Schritt wird eine sogenannte Precoat-Schicht aufgebracht, die aus verdünnter Polyvinylalkohollösung besteht.

Diese Art der Vorbehandlung ist bei ITO-beschichteten Glasoberflächen nicht wirksam, weil Zinnoxid im Gegensatz zu Siliziumoxid keine haftungsvermittelnden, oberflächenaktive Gruppen bildet. Gleiches gilt für Beschichtungen aus anderen Metalloxide, die keine haftungsvermittelnden, oberflächenaktiven Gruppen bilden.

Aus der DE-A- 36 00 630 ist ein Verfahren zum Herstellen eines konventionellen Bildschirmes bekannt, bei dem zunächst auf die gläserne Frontplatte eine PVA enthaltende Haftbeschichtung und darauf nach dem Photoprintverfahren die Leuchtstoffraster aufgebracht werden, wobei die Haftbeschichtung mit einer wässrigen Lösung erfolgt, die etwa 0,05 bis 1,5 Gewichtsprozente, insbesondere 0,08 bis 0,8 Gewichtsprozente Polyvinylalkohol und etwa 0,1 bis 2 Gewichtsprozente, insbesondere 0,5 bis 1,5 Gewichtsprozente Kieselsol enthält. Dies Verfahren betrifft jedoch konventionelle Bildschirme ohne transparente Elektrodenschicht aus indiumdotiertem Zinnoxid oder einem anderen Metalloxid.

Es ist daher Aufgabe der vorliegenden Erfindung, einen Bildschirm mit einer Frontglasplatte mit einer transparenten Elektrodenschicht aus einem Metalloxid und einer Leuchtstoffschicht zur Verfügung zu stellen, der sich durch eine haftfeste Verbindung zwischen der tranparenten Elektrodenschicht und der Leuchtstoffschicht auszeichnet.

Erfindungsgemäß wird die Aufgabe gelöst durch eine haftungsvermittelnde Zwischenschicht zwischen transparenter Elektrodenschicht und Leuchtstoffschicht aus einem Alkalisilikat.

Durch eine derartige haftungsvermittelnde Zwischenschicht erhält man einen festen Schichtverbund zwischen der transparenten Elektrodenschicht und der Leuchtstoffschicht. Die Alkalisilikatschicht läßt sich als sehr dünne und transparente Schicht herstellen. Im Herstellungsverfahren für den Bildschirm zeichnet sie sich durch sehr gute Benetzbarkeit und Anfangshaftung aus.

Im Rahmen der vorliegenden Erfindung ist es bevorzugt, daß das Alkalisilikat ein natriumhaltiges Silikat ist. Es wurde gefunden, daß sich eine haftungsvermittelnde Zwischenschicht aus einem Natriumsilikat durch eine besonders gute Anfangshaftung auszeichnet.

Es ist besonders bevorzugt, daß das Alkalisilikat Natrium-meta-silikat Na₂SiO₃ ist. Natrium-meta-silikat ist sehr gut wasserlöslich und wenig alkalisch, sodaß es die ITO-Schicht und die Leuchtstoffschichten nicht chemisch beeinflußt.

Es kann auch bevorzugt sein, daß das Alkalisilikat Kalium-meta-silikat K₂SiO₃ ist. Kalium-meta-silikat dunkelt auch unter intensiver UV-Belichtung während des photolithographischen Herstellungsverfahrens nicht nach.

Nachfolgend wird die Erfindung anhand eines Beispiels weiter erläutert.

Die erfindungsgemäße haftungsvermittelnde Zwischenschicht besteht aus einem Alkalisilkat, z.B. aus einem monomere Orthosilikate wie Na₄SiO₄, K₄SiO₄, Na₂Si₂O₅, K₂Si₂O₅ oder insbesondere bevorzugt aus kettenförmigen Metasilikaten wie Na₂SiO₃ und K₂SiO₃.

Das Herstellungsverfahren für die haftungsvermittelnde Zwischenschicht richtet sich im allgemeinen nach dem photolithographschen Herstellungsverfahren für die darüberliegenden Leuchtstoffschichten. Es ist bevorzugt, daß das bei dem photolithografischen Verfahren verwendete wasserlösliche Polymere auch als intermediäres Bindemittel für die Alkalisilikatschicht verwendet wird.

Üblicherweise werden die Leuchtstoffe in einer Suspension des Photoresists Polyvinylalkohol/ Ammoniumdichromat aufgetragen und anschließend durch Photolyse strukturiert. In diesem Fall wird auch die haftungsvermittelnde Zwischenschicht aus einem Alkalisilikat aus einer Lösung in Polyvinylalkohol und Wasser aufgebracht.

Das Photoresist-System PVA/ADC kann aber auch durch andere Photoresist-Systeme ersetzt sein, die andere wasserlösliche photosensitive Polymere enthalten, beispielsweise PVA-Derivate mit chromophoren Seitengruppen, die die Vernetzung bewirken, wie Polyvinylalkohol mit Stilbazoliumgruppen (PVA- SBQ), Polyvinylalkohol mit Styryl-quinoliniumgruppen, Polyvinylalkohol mit Styryl-dimethylthiazoliumgruppen, Polyvinylalkohol mit N-(1-Pyridinio)benzamidategruppen (PVA-PB), Polyvinylcinnamat, Polyvinyl-azidobenzacetal, polymere Azide oder ähnliches. In diesem Fall wird die Alkalisilikatschicht bevorzugt mit demselben wasserlöslichen photosensitiven Polymeren aufgetragen wie die Leuchtstoffschicht. Es bilden sich jeweils intermediär Polymerisate zwischen dem Alkalisilikat und dem Polymeren, die die Anfangshaftung zu der ITO-Oberfläche bewirken.

Die haftungsvermittelnde Zwischenschicht aus einem Alkalisilikat kann aber auch mit einem anderen organischen polymeren Bindemittel aufgetragen werden, das beim abschließenden Einbrennen des Bildschirms mit ausbrennt.

Der erfindungsgemäße Bildschirm mit der haftungsvermittlenden Zwischenschicht aus Alkalisilikat wird durch die folgenden Verfahrensschritte hergestellt:
- Beschichten der Frontglasplatte mit einer transparenten Elektrodenschicht aus indiumdotierten Zinnoxid (ITO) oder einem anderen Metalloxid,
- Reinigung der Oberfläche der Elektrodenschicht
- Aufbringen einer wässrigen Lösung von Alkalisilikat und einem wasserlöslichen photosenisitven Polymeren oder einem organischen polymeren Bindemittel, die das Polymere und das Alkalisilikat im Gewichtsverhältnis von 10 zu 1 bis 1 : 10 enthält, durch Tauchen, Sprühen, Rollen, Spin-On-Coating, oder Drucken
- Abschleudern von überschüssiger Lösung
- Trocknen bei 40°C
- Herstellung einer oder mehrerer Leuchtstoffschichten durch ein naßchemisches photolithographisches Verfahren wie Patch-Coating-Verfahren, Flowcoating -Verfahren oder ähnliche Verfahren
- Trocknen bei 40°C
- Belichtung mit UV-Licht
- Entwicklung der belichteten Schicht, z.B. durch Druckspülen
- Trocknen bei 40°C
- Einbrennen der Beschichtung bei 400°C mit Ausbrennen des organischen Polymeren

Die haftungsvermittelnde Zwischenschicht aus Alkalisilikat ist sehr gut benetzbar und bewirkt eine erheblich verbesserte Anfangshaftung der Leuchtstoffschichten auf dem Substrat. Deshalb kann bei dem nachfolgenden photolithografischen Verfahren zum Aufbringen der Leuchtstoffe die Menge des Photoresists, d.h. üblicherweise Polyvinyl-alkohol - Ammoniumdichromat (PVA-ADC), reduziert werden, ohne daß z. B. beim Abspülen der entwickelten Leuchtstoffschichten die Haftfestigkeit der Leuchtstoffpunkte bzw. -linien beeinträchtigt wird. Eine Reduzierung auf 10 % der üblichen PVA-ADC- Menge ist möglich.

Daraus resultiert eine ebenfalls erheblich reduzierte Menge an "toten" Schichten mit aus dem ADC gebildeten Cr₂O₃ in der fertigen Bildschirmbeschichtung. Diese "toten" Schichten absorbieren Elektronen, ohne Lumineszenz zu erzeugen. Deshalb können die erfindungsgemäß beschichteten Bildschirme mit reduziertem Cr₂O₃-Gehalt bei niedriger Anregungsspannung betrieben werden als Bildschirme nach dem Stand der Technik.

### Ausführungsbeispiel

Die Herstellung des Bildschirms geht von einer 43.2 cm (17")-Frontglasplatte aus, die aus einer 2mm dicken Glasplatte besteht, auf die eine ITO-Schicht von etwa 100 nm Dicke aufgesputtert ist. Diese Frontglasplatte mit Elektrodenschicht wird eine Stunde mit deionisiertem Wasser gewaschen. Für die haftungsvermittelnde Zwischenschicht wird eine Beschichtungslösung aus 0,1 Gew.-% PVA und 0,1 Gew.-% Na₂SiO₃ aus 10%igen PVA- Lösung und 10%iger Na₂SiO₃.5H₂O-Lösung in Wasser hergestellt. 50 ml diese Beschichtungslösung werden im Spin-On-Verfahren mit 200 rpm aufgetragen. Die so beschichtete Frontglasplatte wird 10 min bei 40°C getrocknet. Anschließend werden im Patch-Coating-Vefahren nacheinander eine Black-Matrix-Schicht, die grüne, die rote und die blaue Leuchtstoffschicht aufgetragen, belichtet und entwickelt. Abschließend werden die Schichten bei 400°C eingebrannt, dabei wird das organische Bindemittel PVA ausgebrannt.

## Patentansprüche

1. Bildschirm mit einer Frontglasplatte mit einer transparenten Elektrodenschicht aus einem Metalloxid, einer Leuchtstoffschicht und einer haftungsvermittelnde Zwischenschicht zwischen Elektrodenschicht und Leuchtstoffschicht aus einem Alkalisilikat.

2. Bildschirm gemäß Anspruch 1,
**dadurch gekennzeichnet,**
**daß** das Alkalisilikat ein natriumhaltiges Silikat ist.

3. Bildschirm gemäß Anspruch 1,
**dadurch gekennzeichnet,**
**daß** das Alkalisilikat Natrium-meta-silikat Na₂SiO₃ ist.

4. Bildschirm gemäß Anspruch 1,
**dadurch gekennzeichnet,**
**daß** das Alkalisilikat Kalium-meta-silikat K₂SiO₃ ist.

## Claims

1. A display screen having a glass face plate comprising a transparent electrode layer of a metal oxide, a phosphor layer and an adhesive intermediate layer of an alkali silicate, which is provided between the electrode layer and the phosphor layer.

2. A display screen as claimed in Claim 1, **characterized in that** the alkali silicate is a sodium-containing silicate.

3. A display screen as claimed in Claim 1, **characterized in that** the alkali silicate is sodium metasilicate Na₂SiO₃.

4. A display screen as claimed in Claim 1, **characterized in that** the alkali silicate is potassium metasilicate K₂SiO₃.

## Revendications

1. Ecran avec une plaque frontale en verre dotée d'une couche transparente d'électrodes en un oxyde métallique, une couche de substance luminescente et une couche intermédiaire améliorant le pouvoir adhésif entre la couche d'électrodes et la couche de substance luminescente en un silicate alcalin.

2. Ecran selon la revendication 1,
**caractérisé en ce**
**que** le silicate alcalin est un silicate contenant du sodium.

3. Ecran selon la revendication 1,
**caractérisé en ce**
**que** le silicate alcalin est un métasilicate de sodium Na₂SiO₃.

4. Ecran selon la revendication 1,
**caractérisé en ce**
**que** le silicate alcalin est un métasilicate de potassium K₂SiO₃.
